# EUROPEAN PATENT APPLICATION

(11) **EP 4 800 554 A1**
(43) Date of publication of application: **02.09.2026**
(21) Application number: 25227393.3
(22) Date of filing: 29.12.2025
(51) Int. Cl.: G06F 9/50

(54) **IMPROVED RESOURCE UTILIZATION IN JOB SCHEDULER SYSTEMS**

(30) Priority: 28.02.2025 US 202519066623
(71) Applicant: SAP SE, 69190 Walldorf (DE)
(72) Inventor: LI, Hui, 69190 Walldorf (DE)
(74) Representative: Müller-Boré & Partner Patentanwälte PartG mbB

(57) **Abstract**

Methods, systems, and computer-readable storage media for receiving a first job with a first time-series of a first type of historic resource utilization and a second time-series of a second type of historic utilization, receiving a second job with a third time-series of the first type of historic resource utilization and a fourth time-series of the second type of historic utilization, determining a first correlation coefficient between the first time-series and the third time-series, determining a second correlation coefficient between the second time-series and the fourth time-series, combining the first correlation coefficient with the second correlation coefficient to generate a first total correlation coefficient, and in response to the first total correlation coefficient being below a threshold, transmitting the first job and the second job as a first job pair to a first executor of the plurality of job executors to be executed concurrently by the first executor.

## Description

### BACKGROUND

Cloud computing can be described as Internet-based computing that provides shared computer processing resources and data to computers and other devices on demand. Users can establish respective sessions, during which processing resources and bandwidth are consumed. During a session, for example, a user is provided on-demand access to a shared pool of configurable computing resources (e.g., computer networks, servers, storage, applications, and services). The computing resources can be provisioned and released (e.g., scaled) to meet user demand.

In cloud-based environments, jobs can be periodically performed (e.g., hourly, daily, weekly, monthly) by job workers. A job can be described as a logical container that contains a single task or multiple tasks that are executed towards some end. For example, a job can be executed to perform database administration and/or database maintenance tasks (e.g., backing up, updating statistics, and/or dumping a database). Execution of a job consumes technical resources (e.g., processing, memory, network input/output (I/O)) and different jobs consume different types and/or levels of technical resources. For example, one job can be processor (central processing unit (CPU)) intensive, while another job can be memory intensive. A job scheduler system queues jobs for retrieval by job workers. However, traditional job scheduler systems fail to adequately account for disparities between jobs, which results in inefficient consumption of technical resources across job workers that execute the jobs.

### SUMMARY

Implementations of the present disclosure are directed to job scheduler systems. More particularly, implementations of the present disclosure are directed to a job scheduler system that selectively pairs jobs for concurrent execution by job workers. As described in further detail herein, the job scheduler system improves resource utilization across job workers that execute the jobs, among other improvements and advantages.

In some implementations, actions include receiving a first job with a first time-series of a first type of historic resource utilization and a second time-series of a second type of historic utilization, receiving a second job with a third time-series of the first type of historic resource utilization and a fourth time-series of the second type of historic utilization, determining a first correlation coefficient between the first time-series and the third time-series, determining a second correlation coefficient between the second time-series and the fourth time-series, combining the first correlation coefficient with the second correlation coefficient to generate a first total correlation coefficient, and determining that the first total correlation coefficient is below a threshold, and at least partially in response, transmitting the first job and the second job as a first job pair to a first executor of the plurality of job executors to be executed concurrently by the first executor. Other implementations of this aspect include corresponding systems, apparatus, and computer programs, configured to perform the actions of the methods, encoded on computer storage devices.

These and other implementations can each optionally include one or more of the following features: actions further include receiving a third job with a fifth time-series of the first type of historic resource utilization and a sixth time-series of the second type of historic utilization, receiving a fourth job with a seventh time-series of the first type of historic resource utilization and an eighth time-series of the second type of historic utilization, determining a third correlation coefficient between the fifth time-series and the seventh time-series, determining a fourth correlation coefficient between the sixth time-series and the eighth time-series, combining the third correlation coefficient with the fourth correlation coefficient to generate a second total correlation coefficient, and determining that the second total correlation coefficient is below the threshold, and at least partially in response, transmitting the third job and the fourth job as a second job pair to a second executor of the plurality of job executors to be executed concurrently by the second executor; the first job pair is transmitted to the first executor before the second job pair is transmitted to the second executor; actions further include receiving a fifth time-series of a third type of historic resource utilization and a sixth time-series of a fourth type of historic utilization of the first job, receiving a seventh time-series of the third type of historic resource utilization and an eighth time-series of the fourth type of historic utilization of the second job, determining a third correlation coefficient between the fifth time-series and the seventh time-series, and determining a fourth correlation coefficient between the sixth time-series and the eighth time-series, wherein the first total correlation coefficient is further determined based on the third correlation coefficient and the fourth correlation coefficient; actions further include, in response to determining that the first total correlation coefficient is below the threshold, including the first total correlation coefficient in a sorted list and selecting the first total correlation coefficient from the sorted list to define the first job pair comprising the first job and the second job; the first type of historic resource utilization includes one of CPU usage, memory usage, network usage, and disk usage and the second type of historic resource utilization comprises another of CPU usage, memory usage, network usage, and disk usage; combining the first correlation coefficient with the second correlation coefficient to generate a first total correlation coefficient includes applying a first weight to the first correlation coefficient to provide a weighted first correlation coefficient, and applying a second weight to the second correlation coefficient to provide a weighted second correlation coefficient, the first total correlation coefficient including a combination of the weighted first correlation coefficient and the weighted second correlation coefficient; actions further include receiving a third job with a fifth time-series of the first type of historic resource utilization and a sixth time-series of the second type of historic utilization, determining a third correlation coefficient between the first time-series and the fifth time-series, determining a fourth correlation coefficient between the second time-series and the sixth time-series, combining the third correlation coefficient with the fourth correlation coefficient to generate a second total correlation coefficient, and determining that the second total correlation coefficient exceeds a threshold, and at least partially in response, transmitting the third job as a single job to a second executor of the plurality of job executors to be executed by the second executor; actions further include, prior to transmitting the first job and the second job as the first job pair to the first executor, selecting the first executor to execute the first job pair using load balancing; actions further include determining that third time-series has a fewer number of values than the first time series and, in response, padding the third time-series to have an equal number of values as the first time-series; and the first correlation coefficient and the second correlation coefficient are Pearson correlation coefficients.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### DESCRIPTION OF DRAWINGS

FIG. 1 depicts an example architecture that can be used to execute implementations of the present disclosure.
FIG. 2 depicts an example job execution system in accordance with implementations of the present disclosure.
FIGs. 3A and 3B depict example job pairing in accordance with implementations of the present disclosure.
FIG. 4 depicts an example process that can be executed in accordance with implementations of the present disclosure.
FIG. 5 is a schematic illustration of example computer systems that can be used to execute implementations of the present disclosure.

Like reference symbols in the various drawings indicate like elements.

### DETAILED DESCRIPTION

Implementations of the present disclosure are directed to job scheduler systems. More particularly, implementations of the present disclosure are directed to a job scheduler system that selectively pairs jobs for concurrent execution by job workers. As described in further detail herein, the job scheduler system improves resource utilization across job workers that execute the jobs, among other improvements and advantages.

Implementations can include actions of receiving a first job with a first time-series of a first type of historic resource utilization and a second time-series of a second type of historic utilization, receiving a second job with a third time-series of the first type of historic resource utilization and a fourth time-series of the second type of historic utilization, determining a first correlation coefficient between the first time-series and the third time-series, determining a second correlation coefficient between the second time-series and the fourth time-series, combining the first correlation coefficient with the second correlation coefficient to generate a first total correlation coefficient, and determining that the first total correlation coefficient is below a threshold, and at least partially in response, transmitting the first job and the second job as a first job pair to a first executor of the plurality of job executors to be executed concurrently by the first executor.

To provide further context for implementations of the present disclosure, and as introduced above, cloud computing can be described as Internet-based computing that provides shared computer processing resources and data to computers and other devices on demand. Users can establish respective sessions, during which processing resources and bandwidth are consumed. During a session, for example, a user is provided on-demand access to a shared pool of configurable computing resources (e.g., computer networks, servers, storage, applications, and services). The computing resources can be provisioned and released (e.g., scaled) to meet user demand.

In cloud-based environments, jobs can be periodically performed (e.g., hourly, daily, weekly, monthly) by job workers. A job can be described as a logical container that contains a single task or multiple tasks that are executed towards some end. For example, a job can be executed to perform database administration and/or database maintenance tasks (e.g., backing up, updating statistics, and/or dumping a database). A job worker (e.g., a program executing on a server) retrieves a job from a job queue and executes the job. Execution of a job consumes technical resources (e.g., processing, memory, network input/output (I/O)) and different jobs consume different types and/or levels of technical resources. For example, jobs can be considered CPU-intensive (consume many CPU resources but few memory/network resources), memory-intensive (consume many memory resources but few CPU/network resources), and/or network-intensive (consume many network resources but few CPU/memory resources).

A job scheduler system queues jobs in the job queue for retrieval by job workers. Multiple job workers fetch jobs from the job queue based on some load balancing algorithm (e.g., round robin), and each job worker executes a job. However, traditional load balancing approaches fail to account for the technical resources each job will consume. As such, traditional job scheduler systems fail to adequately account for disparities in resource consumption between jobs, which results in inefficient consumption of technical resources across job workers that execute the jobs. In some such systems, the job queue forwards jobs for execution by job workers in the order in which they are received, and such a system can be inefficient.

In view of the foregoing, implementations of the present disclosure provide a job scheduler system that improves resource utilization across job workers that execute jobs. As described in further detail herein, the job scheduler system of the present disclosure selectively pairs jobs based on complementary relationships in resource utilization (CPU usage, memory usage, network input/output (IO) usage, disk IO usage) between jobs. In this manner, implementations of the present disclosure distribute jobs having complementary relationships in resource utilization for concurrent execution by job workers. As a result, the resource utilization (CPU, memory, network resources) of the servers that execute the job workers is improved over traditional approaches.

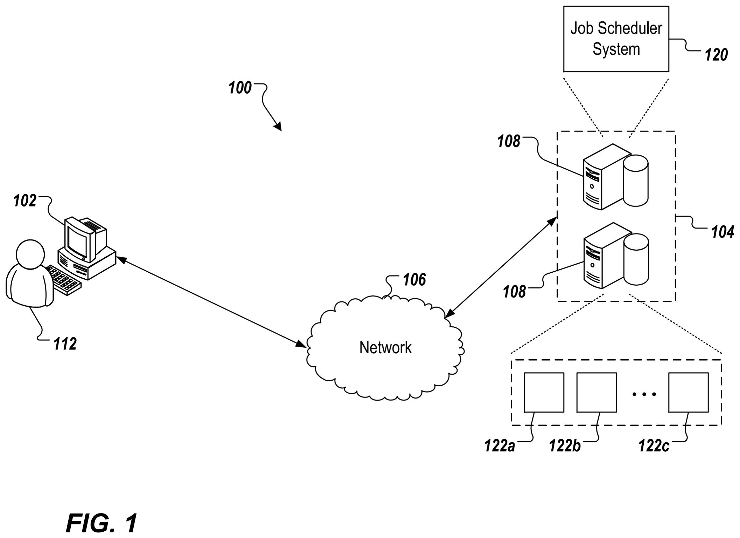

FIG. 1 depicts an example architecture 100 in accordance with implementations of the present disclosure. In the depicted example, the example architecture 100 includes a client device 102, a network 106, and a server system 104. The server system 104 includes one or more server devices and databases 108 (e.g., processors, memory). In the depicted example, a user 112 interacts with the client device 102.

In some examples, the client device 102 can communicate with the server system 104 over the network 106. In some examples, the client device 102 includes any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the server system 104 includes at least one server and at least one data store. In the example of FIG. 1, the server system 104 is intended to represent various forms of servers including, but not limited to a web server, an application server, a proxy server, a network server, and/or a server pool. In general, server systems accept requests for application services and provides such services to any number of client devices (e.g., the client device 102 over the network 106). In some implementations, the server system 104 can host a job scheduler system 120 that distributes jobs to job workers 122a, 122b, 122c. In accordance with implementations of the present disclosure, the job scheduler system 120 selectively pairs jobs for concurrent execution by one or more of the job workers 122a, 122b, 122c to improve resource utilization across the server system 104. In some examples, concurrent execution means that execution of the jobs overlap in time. For example, executions of the jobs can begin at the same time, can begin at different times, can end at the same time, and/or can end at different times, however, there is some period of time overlapping between the executions.

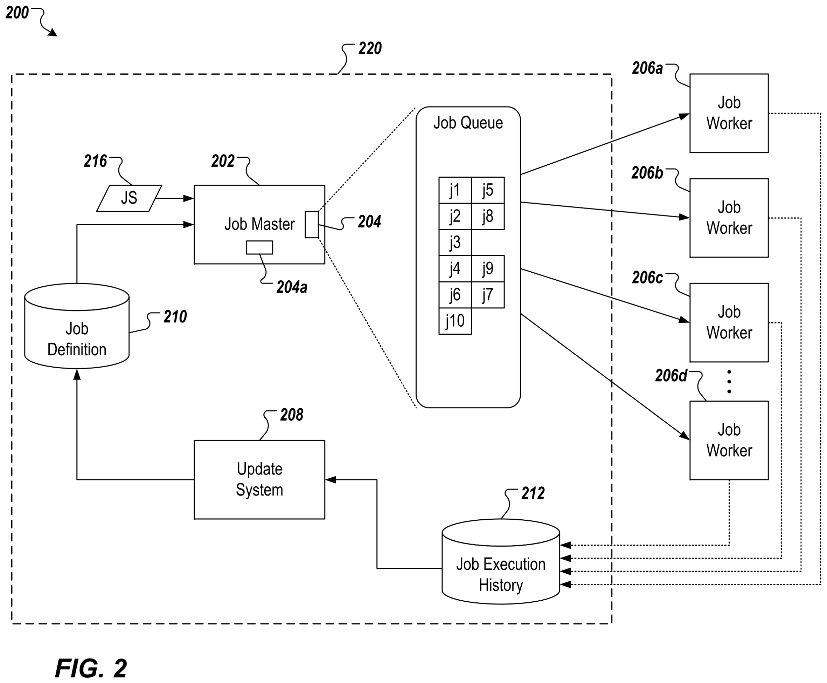

FIG. 2 depicts an example job execution system 200 in accordance with implementations of the present disclosure. In the depicted example, the job execution system 200 includes a job master 202, a job queue 204, job workers 206a, 206b, 206c, 206d, an update system 208, a job definition datastore 210, and a job execution history datastore 212. In some examples, components of the job execution system 200 can be included in a job scheduler system 220 of the present disclosure. In the example of FIG. 2, the job scheduler system 220 includes the job master 202, the job queue 204, the update system 208, the job definition datastore 210, and the job execution history datastore 212. In some examples, the job master 202 receives a jobs schedule 216 that informs the job master 202 of which jobs are to be executed (e.g., for or during a particular period of time).

In some implementations, the job definition datastore 210 stores a job definition table that records parameters of each job that is to be executed by the job execution system 200. Among other parameters, the job definition table can record, for each job, a job identifier (JOB_ID), a CPU cost (COST_CPU) (e.g., processing consumed by execution of the job), a memory cost (COST_MEMORY) (e.g., memory consumed by execution of the job), a network IO cost (COST_NETWORK_IO) (e.g., network bandwidth consumed by execution of the job), a disk IO cost (COST_DISK_IO) (e.g., disk read/write consumed by execution of the job). Table 1 provides further detail on job definition parameters:

**Table 1: Example Columns of Job Definition Table**

| Column Name | Data Type | Description | Default Value |
|---|---|---|---|
| JOB_ID | Number | Unique ID of the job | |
| COST_CPU | BLOB | CPU time-series sampling data consumed by the last run of the job. | null |
| COST MEMERY | BLOB | Memory time-series sampling data consumed by the last run of the job. | null |
| COST_NETWORK_IO | BLOB | Network IO time-series sampling data consumed by the last run of the job. | null |
| COST_DISK_IO | BLOB | Disk IO time-series sampling data consumed by the last run of the job. | null |
| ... | ... | ... | ... |

In the example of Table 1, if a job is new and has not been previously executed, default values of 'null' are provided for parameters. If the job has been executed previously, the values of the parameters are non-null.

In further detail, the job master 202 reads jobs that are to be executed (e.g., for or during a certain period) from the jobs schedule 216 and retrieves a job definition for each job from the job definition datastore 210. The job master 202 puts the jobs into a pre-queue 204a and selectively pairs jobs, as described in further detail herein. In some examples, one or more jobs (un-paired jobs) and one or more job pairs are put into the job queue 204. The job master 202 exposes a web service application programming interface (API), through which the job workers 206a, 206b, 206c, 206d retrieve jobs and/or job pairs for execution.

In accordance with implementations of the present disclosure, prior to putting jobs in the job queue 204, the job master 202 selectively combines jobs into job pairs based on complementary relationships in resource utilization rates. In some cases, this causes some jobs received later to be placed earlier in the queue if they are paired with an earlier received job.

By way of non-limiting example, a jobs schedule (e.g., the jobs schedule 216 of FIG. 2) can include a set of jobs [*j*₁, *... ,j_{M}*] (e.g., jobs that are to be executed for a particular period of time). For each job *j_{q}* in the set of jobs, one or more of a CPU time-series sampling data consumed by the last run of *j_{q},* a memory time-series sampling data consumed by the last run of *j_{q},* a network IO time-series sampling data consumed by the last run of *j_{q},* and a disk IO time-series sampling data consumed by the last run of *j_{q},* or any appropriate combination thereof, are determined. The time-series can be respectively provided as: ${cpu}_{q} = \left[{cpu}_{q , 1} ,{cpu}_{q , 2 ,} {cpu}_{q , 3 ,}…,{cpu}_{q , {N}_{q}}\right]$ ${mem}_{q} = \left[{mem}_{q , 1} ,{mem}_{q , 2 ,} {mem}_{q , 3 ,}…,{mem}_{q , {N}_{q}}\right]$ ${net}_{q} = \left[{net}_{q , 1} ,{net}_{q , 2 ,} {net}_{q , 3 ,}…,{net}_{q , {N}_{q}}\right]$ ${disk}_{q} = \left[{disk}_{q , 1} ,{disk}_{q , 2 ,} {disk}_{q , 3 ,}…,{disk}_{q , {N}_{q}}\right]$ where *N_{q}* is the total length of time-series sampling data. In some examples, the time-series are provided from the job definition table (e.g., stored in the job definition datastore 210).

In some implementations, a correlation coefficient *ρ*(*i*,*j*) (or *ρ_{i,j}*) is determined between every two jobs *jᵢ* and *jⱼ*. In some examples, the correlation coefficient *ρ*(*i,j*) is provided as a Pearson correlation coefficient, which can be described as a measure of the linear correlation between two sets of data. It is contemplated, however, that implementations of the present disclosure can be realized using any appropriate correlation coefficient. In some examples, the total length of time-series sampling data between *jᵢ* and *jⱼ* can be different (e.g., *jᵢ* took longer to execute (e.g., 10 minutes) than *jⱼ* (e.g., 5 minutes) or vice-versa such that the number of samples for each job may be unequal (e.g if the sampling rate is once per minute, job *jᵢ* would have 10 samples while job *jⱼ* would have 5 samples). If the total length of time-series sampling data between *jᵢ* and *jⱼ* is different, the shorter time-series is extended to the same length as the longer time-series. For example, the shorter-time-series can be padded with one or more 0's at the end to be made equal in length to the longer time-series.

In some implementations, the correlation coefficient *ρ*(*i*,*j*) is determined using the following formulas: ${N}_{m} = max \left({N}_{i}, {N}_{j}\right)$ ${ρ}_{cpu} \left(i, j\right) = \frac{{N}_{m} {\sum }_{n = 1}^{{N}_{m}} \left({cpu}_{i , n}⋅{cpu}_{j , n}\right) - {\sum }_{n = 1}^{{N}_{m}} {cpu}_{i , n} ⋅ {\sum }_{n = 1}^{{N}_{m}} {cpu}_{j , n}}{\sqrt{{N}_{m} ⋅ {\sum }_{n = 1}^{{N}_{m}} {\left({cpu}_{i , n}\right)}^{2} - {\left({\sum }_{n = 1}^{{N}_{m}} {cpu}_{i , n}\right)}^{2}} ⋅ \sqrt{{N}_{m} ⋅ {\sum }_{n = 1}^{{N}_{m}} {\left({cpu}_{j , n}\right)}^{2} - {\left({\sum }_{n = 1}^{{N}_{m}} {cpu}_{j , n}\right)}^{2}}}$ $\begin{matrix}{ρ}_{mem} \left(i, j\right) \\ = \frac{{N}_{m} {\sum }_{n = 1}^{{N}_{m}} \left({mem}_{i , n}⋅{mem}_{j , n}\right) - {\sum }_{n = 1}^{{N}_{m}} {mem}_{i , n} ⋅ {\sum }_{n = 1}^{{N}_{m}} {mem}_{j , n}}{\sqrt{{N}_{m} ⋅ {\sum }_{n = 1}^{{N}_{m}} {\left({mem}_{i , n}\right)}^{2} - {\left({\sum }_{n = 1}^{{N}_{m}} {mem}_{i , n}\right)}^{2}} ⋅ \sqrt{{N}_{m} ⋅ {\sum }_{n = 1}^{{N}_{m}} {\left({mem}_{j , n}\right)}^{2} - {\left({\sum }_{n = 1}^{{N}_{m}} {mem}_{j , n}\right)}^{2}}}\end{matrix}$ ${ρ}_{net} \left(i, j\right) = \frac{{N}_{m} {\sum }_{n = 1}^{{N}_{m}} \left({net}_{i , n}⋅{net}_{j , n}\right) - {\sum }_{n = 1}^{{N}_{m}} {net}_{i , n} ⋅ {\sum }_{n = 1}^{{N}_{m}} {net}_{j , n}}{\sqrt{{N}_{m} ⋅ {\sum }_{n = 1}^{{N}_{m}} {\left({net}_{i , n}\right)}^{2} - {\left({\sum }_{n = 1}^{{N}_{m}} {net}_{i , n}\right)}^{2}} ⋅ \sqrt{{N}_{m} ⋅ {\sum }_{n = 1}^{{N}_{m}} {\left({net}_{j , n}\right)}^{2} - {\left({\sum }_{n = 1}^{{N}_{m}} {net}_{j , n}\right)}^{2}}}$ ${ρ}_{disk} \left(i, j\right) = \frac{{N}_{m} {\sum }_{n = 1}^{{N}_{m}} \left({disk}_{i , n}⋅{disk}_{j , n}\right) - {\sum }_{n = 1}^{{N}_{m}} {disk}_{i , n} ⋅ {\sum }_{n = 1}^{{N}_{m}} {disk}_{j , n}}{\sqrt{{N}_{m} ⋅ {\sum }_{n = 1}^{{N}_{m}} {\left({disk}_{i , n}\right)}^{2} - {\left({\sum }_{n = 1}^{{N}_{m}} {disk}_{i , n}\right)}^{2}} ⋅ \sqrt{{N}_{m} ⋅ {\sum }_{n = 1}^{{N}_{m}} {\left({disk}_{j , n}\right)}^{2} - {\left({\sum }_{n = 1}^{{N}_{m}} {disk}_{j , n}\right)}^{2}}}$ $ρ \left(i, j\right) = {w}_{cpu} ⋅ {ρ}_{cpu} \left(i, j\right) + {w}_{mem} ⋅ {ρ}_{mem} \left(i, j\right) + {w}_{net} ⋅ {ρ}_{net} \left(i, j\right) + {w}_{disk} ⋅ {ρ}_{disk} \left(i, j\right)$ In Equation 6, *w_{cpu}* is a weight applied for CPU usage, *wₘₑₘ* is a weight applied for memory usage, *wₙₑₜ* is a weight applied for network IO usage, and *w_{disk}* is a weight applied for disk IO usage. In some examples, the following constraint is applied: ${w}_{cpu} + {w}_{mem} + {w}_{net} + {w}_{disk} = 1$ The values *w_{cpu}, Wₘₑₘ, wₙₑₜ, w_{disk}* can be adjusted as deemed appropriate. In some examples, *ρ*(*i,j*) *= ρ*(*j,i),* where i < j. In other words, the correlation coefficient *ρ*(*i*,*j*) is calculated for *jᵢ* and *jⱼ*, where *jᵢ* is considered before *jⱼ* in the pre-queue. Working through the pre-queue, the correlation coefficient *ρ*(*j,i)* need not be calculated for *jⱼ* and *jᵢ,* because the correlation coefficient *ρ*(*i*,*j*) has already been determined. In some examples, the lower the correlation coefficient *ρ*(*i*,*j*) is, the better the complementary relationship between resource utilizations of *jᵢ* and *jⱼ* is*.*

While the example of Equations 1-6 includes each of the CPU time-series, the memory time-series, the network IO time-series, and the disk IO time-series, it is contemplated that implementations of the present disclosure can be realized using any appropriate number of time-series and/or any appropriate combination of time-series.

In some implementations, all correlation coefficients that are less than a threshold *ρₜₕ* are provided in a sub-set of correlation coefficients. In some examples, *ρₜₕ* is a negative constant and *ρₜₕ* ∈ (-1, 0) that can be adjusted as needed as system resources and demands change. As a general rule, the more negative the Pearson correlation coefficient is, the less related the two jobs are. Similarly, the more positive the Pearson correlation coefficient, the two jobs are more related in their use of resources. In some embodiments, a Pearson correlation coefficient of 0 indicates neither a positive or negative correlation. Once calculated and filtered by the threshold *ρₜₕ,* the remaining correlation coefficients in the sub-set of correlation coefficients are sorted in ascending order (lowest value first) and are stored as a list *ρₛₒᵣₜ.* In some examples, and starting from the beginning of *ρₛₒᵣₜ,* for every element *ρ*(*i,j*) in *ρₛₒᵣₜ, jᵢ* and *jⱼ* are combined into a job pair, and any related elements *ρ*(*i,**) and *ρ*(*j,**) are removed from *ρₛₒᵣₜ.* In this manner, a job can only be included in a job pair once.

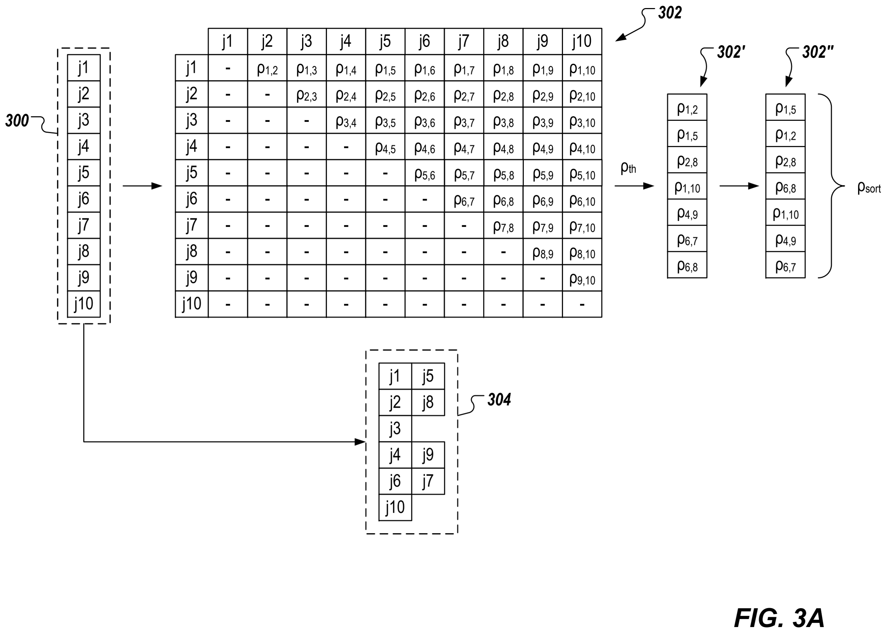

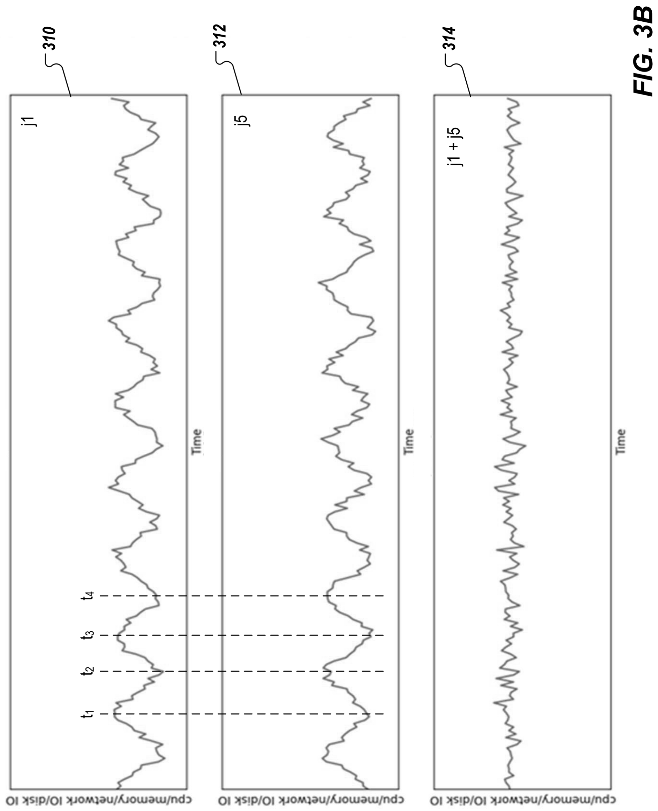

FIGs. 3A and 3B depict example job pairing in accordance with implementations of the present disclosure. With particular reference to FIG. 3A, a pre-queue 300 (e.g., the pre-queue 204a of FIG. 2) includes a set of jobs [*j*₁, ... *, j*₁₀] (e.g., provided in the jobs schedule 216 of FIG. 2). For each job in the set of jobs, time-series data for each of the parameters is retrieved (e.g., from the job definition table stored in the job definition datastore 210), and a set of correlation coefficients 302 is determined, as described herein with reference to Equations 1 to 6. Each of the correlation coefficients in the set of correlation coefficients 302 is compared to a threshold *ρₜₕ* and is included in a sub-set of correlation coefficients 302' if the calculated coefficients are lower than the threshold *ρₜₕ.* The correlation coefficients in the sub-set of correlation coefficients 302' are put in ascending order (lowest first) to provide a list *ρₛₒᵣₜ* 302".

The list *ρₛₒᵣₜ* 302" is applied to the jobs in the pre-queue 300 to selectively pair jobs into job pairs, as described herein. For example, the first correlation coefficient in the list *ρₛₒᵣₜ* 302" is *ρ*_{1,5}. Consequently, the job *j*₁ and the job *j*₅ are paired into a job pair and each is removed from further pairing consideration. For example, the next correlation coefficient in the list *ρₛₒᵣₜ* is *ρ*_{1,2}. However, because the job *j*₁ had already been paired and removed from pairing consideration, no job pair results from *ρ*_{1,2}. The next correlation coefficient in the list *ρₛₒᵣₜ* is *ρ*_{2,8}. Consequently, the job *j*₂ and the job *j*₈ are paired into a job pair and each is removed from further pairing consideration. This continues until each correlation coefficient in the list *ρₛₒᵣₜ,* resulting in the jobs and job pairs provided in q job queue 304 (e.g., the job queue 204 of FIG. 2) of the example of FIG. 3A. It should be noted, as shown in FIG. 3A, not every job is paired with another job. As seen in correlation coefficients 302', the various combinations that included job *j*₃ were not below threshold *ρₜₕ* and thus not provided in correlation in coefficients 302' leaving job *j*₃ to be executed without a pair. Similarly, job *j*₁₀ will also be executed without a pair even though its correlation coefficient with job *j*₁ was below the threshold *ρₜₕ* because job *j*₁ was paired with job *j*₅ as having a better correlation. Finally, in this described method and system, jobs that are received later in time (e.g., job *j*₅) can be placed earlier in the queue and thereby executed earlier when paired with an earlier received job (e.g., job *j*₁).

With particular reference to FIG. 3B, improvements to resource utilization achieved by implementations of the present disclosure are illustrated. The example of FIG. 3B is representative of the job *j*₁ and the job *j*₅ and the resulting job pair. More particularly, a first time-series 310 represents resource utilization resulting from execution of the job *j*₁ and a second time-series 312 represents resource utilization resulting from execution of the job *j*₅. Each time-series can represent resource utilization in terms of CPU, memory, network IO, and/or disk IO, or any combination thereof.

At a time *t*₁, the resource utilization of the job *j*₁ is at a peak (high), while the resource utilization of the job *j*₅ is at a valley (low). At a time *t*₂, the resource utilization of the job *j*₁ is at a valley (low), while the resource utilization of the job *j*₅ is at a peak (high). This repeats across the first time-series 310 and the second time-series 312. Consequently, the resource utilization rates between the job *j*₁ and the job *j*₅ have a substantially negative or complementary relationship, as reflected in the correlation coefficient *ρ*_{1,5} (e.g., when one job is consuming more resources, the other job is consuming fewer resources). If the job *j*₁ were executed by a server, resources of the server would be under-utilized between the time *t*₁ and a time *t*₃ (and similar time periods along the first time-series 310). That is, the time between the time *t*₁ and a time *t*₃ (and similar time periods along the first time-series 310) can be considered relatively idle periods, in which resource utilization of the server is low. If the job *j*₅ were executed by a server, resources of the server would be under-utilized between the time *t*₂ and a time *t*₄ (and similar time periods along the second time-series 312). That is, the time between the time *t*₂ and a time *t*₄ (and similar time periods along the second time-series 312) can be considered relatively idle periods, in which resource utilization of the server is low.

In accordance with implementations of the present disclosure, and as described herein, the job *j*₁ and the job *j*₅ are combined into a job pair and are concurrently executed by a server. In the example of FIG. 3B, a time-series 314 represents resource utilization resulting from concurrent execution of the job *j*₁ and the job *j*₅. As represented in the time-series 314, while there are small excursions (peaks/valleys) in resource utilization, extended periods of low resource utilization are absent. That is, by concurrently executing the job *j*₁ and the job j₅, resources of the server are active along the duration of the time-series 314 and are absent relatively idle periods (e.g., between the time *t*₁ and a time *t*₃, between the time *t*₂ and a time *t*₄).

Referring again to FIG. 2, the job workers 206a, 206b, 206c, 206d each fetch a job or a job pair from the job queue 204 (e.g., through the API exposed by the job master 202). In some examples, jobs and job pairs are provided to the job workers 206a, 206b, 206c, 206d according to a load balancing algorithm. For example, and with reference to round robin as a non-limiting example, the job worker 206a can fetch a job or job pair, the job worker 206b can next fetch a job or job pair, the job worker 206c can next fetch a job or job pair, the job worker 206d can next fetch a job or job pair, then the job worker 206a can again fetch a job or job pair, the job worker 206b can next fetch a job or job pair, and so on. If a job worker 206a, 206b, 206c, 206d fetches a job, the job worker 206a, 206b, 206c, 206d executes the job. If a job worker 206a, 206b, 206c, 206d fetches a job pair, the job worker 206a, 206b, 206c, 206d concurrently executes the jobs of the job pair.

For each successfully executed job, the job worker 206a, 206b, 206c, 206d that executed the job determines a set of parameters for respective jobs, which includes time-series for each of the CPU cost (COST_CPU), the memory cost (COST_MEMORY), the network IO cost (COST_NETWORK_IO), the disk IO cost of the job. Programming languages that can be used for job workers, such as Java, provide interfaces to determine each thread's resource cost, such as CPU time, memory, network input, network output, disk input, disk output. As a result, this information is available for the job worker to calculate the parameters of each job. The set of parameters for each job is stored into a database table (JOB_EXEC_HISTORY). In some examples, the database table is stored in the job execution history datastore 212. This collected history can be representative of jobs that are executed on a periodic basis such as payroll, inventory updates, tracking information, etc. Having these histories of jobs with very similar characteristics (e.g., originating from the same tenant, utilizing the same databases) provides the information to facilitate pairing jobs presently and in the future.

In some examples, the update system 208 updates sets of parameters in the job definition table after execution of respective jobs. For example, in response to the most-recent run (last run) of a job and a respective addition of the set of parameters for the job in the database table (JOB_EXEC _HISTORY), the update system 208 updates the job definition table to include the set of parameters (from the most-recent (last) run) of the job.

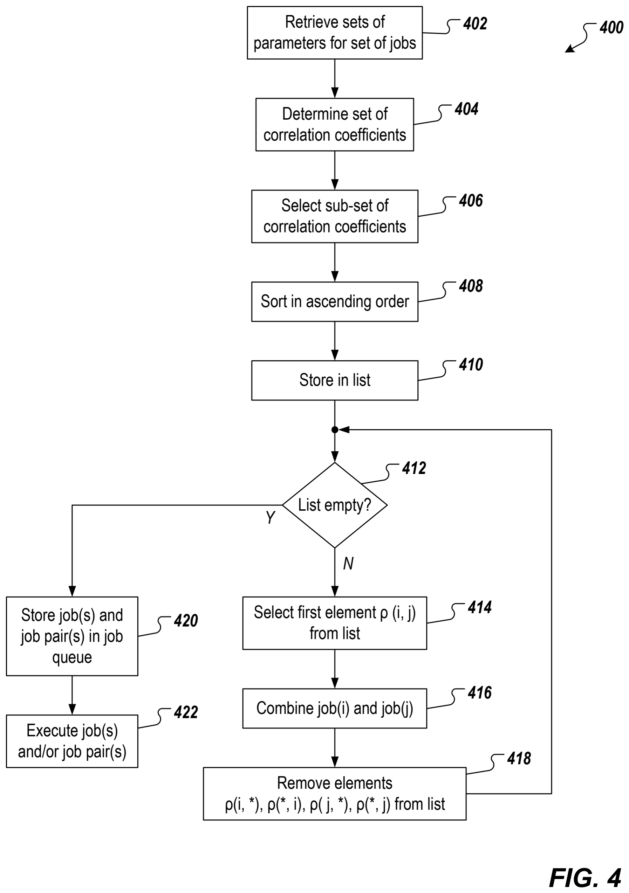

FIG. 4 depicts an example process 400 that can be executed in accordance with implementations of the present disclosure. In some examples, the example process 400 is provided using one or more computer-executable programs executed by one or more computing devices.

Sets of parameters are retrieved for jobs in a set of jobs (402). For example, and as described in detail herein with reference to FIG. 2, the job master 202 receives the jobs schedule 216 that informs the job master 202 of which jobs are to be executed (e.g., for a particular period of time). The jobs schedule 216 can include a set of jobs [*j*₁, *... ,j_{M}*] and, for each job *j_{q}* in the set of jobs [*j*₁, *... ,j_{M}*]*,* a CPU time-series sampling data consumed by the last run of *j_{q},* a memory time-series sampling data consumed by the last run of *j_{q},* a network IO time-series sampling data consumed by the last run of *j_{q},* and/or a disk IO time-series sampling data consumed by the last run of *j_{q},* or any appropriate combination thereof, are determined.

For example, a first job can be associated with a set of parameters including a first time-series of a first type of historic resource utilization (e.g., *cpu*₁ *=* [*cpu*_{1,1} , *cpu*_{1,2,} *cpu*_{1,3*,*} ... , *cpu*_{1*,N*₁}]) and a second time-series of a second type of historic utilization (e.g., mem₁ = [mem_{1,1} , mem_{1,2}, mem_{1,3}, ..., mem_{1,N₁}]) and a second job can be associated with a set of parameters including a third time-series of the first type of historic resource utilization (e.g., *cpu*₂ = [cpu_{2,1} , cpu_{2,2,} *cpu*_{2,3*,*} ... , *cpu*_{2*,N*₂}]) and a fourth time-series of the second type of historic utilization (e.g., mem₂ = [mem_{2,1} , mem_{2,2}, mem_{2,3}, ..., mem_{2,N₂}]). The aforementioned parameters can be determined using an average of such parameters over a set amount (e.g., 5, 10, etc) of scheduled job executions. Alternatively, these parameters could just be those parameters determined from only the last such job execution. As will described later, these historic resource parameters will be collected from previously executed jobs in order to potentially pair current jobs together.

A set of correlation coefficients is determined (404). For example, and as described in detail herein, the job master 202 determines a correlation coefficient *ρ*(*i, j*) between every two jobs *jᵢ* and *jⱼ* in the set of jobs [*j*₁, *... , j_{M}*]*.* In some examples, a first correlation coefficient (e.g., *ρ_{cpu}*(1,2)) is determined between the first time-series and the third time-series, a second correlation coefficient (e.g., *ρₘₑₘ*(1,2)) is determined between the second time-series and the fourth time-series, and the first correlation coefficient is combined with the second correlation coefficient to generate a first total correlation coefficient (e.g., *ρ*_{1,2}). In some examples, the first correlation coefficient is combined with the second correlation coefficient as a weighted sum using respective weights (e.g., *w_{cpu}, wₘₑₘ*).

A sub-set of correlation coefficients is selected (406). For example, and as described in detail herein, all correlation coefficients that are less than a threshold *ρₜₕ* are provided in a sub-set of correlation coefficients. Correlation coefficients in the sub-set of correlation coefficients are sorted in ascending order and are stored in a list (410). It is determined whether the list is empty (412). If the list is not empty, a first element *ρ*(*i*,*j*) is selected from the list (414) and a job *jᵢ* and a job *jᵢ* are combined into a job pair (416). Elements *ρ*(*i*,*), *ρ*(**,i), ρ*(*j*,*)*,* and *ρ*(*,j) are removed from the list and the example process 400 loops back. For example, and as described in detail herein, and starting from the beginning of *ρₛₒᵣₜ,* for every element *ρ*(*i,j*) in *ρₛₒᵣₜ, jᵢ* and *jⱼ* are combined into a job pair, and any related elements *p(i,*), p(*, i), ρ*(*j*,*), and *ρ*(*,*j*) are removed from *ρₛₒᵣₜ.* In this manner, a job can only be included in a job pair once.

If the list is empty, one or more jobs and/or one or more job pairs are stored in the job queue (420) and the one or more jobs and/or one or more job pairs are executed (422). For example, and as described in detail herein, the job workers 206a, 206b, 206c, 206d each fetch a job or a job pair from the job queue 204 (e.g., through the API exposed by the job master 202). In some examples, jobs and job pairs are provided to the job workers 206a, 206b, 206c, 206d according to a load balancing algorithm.

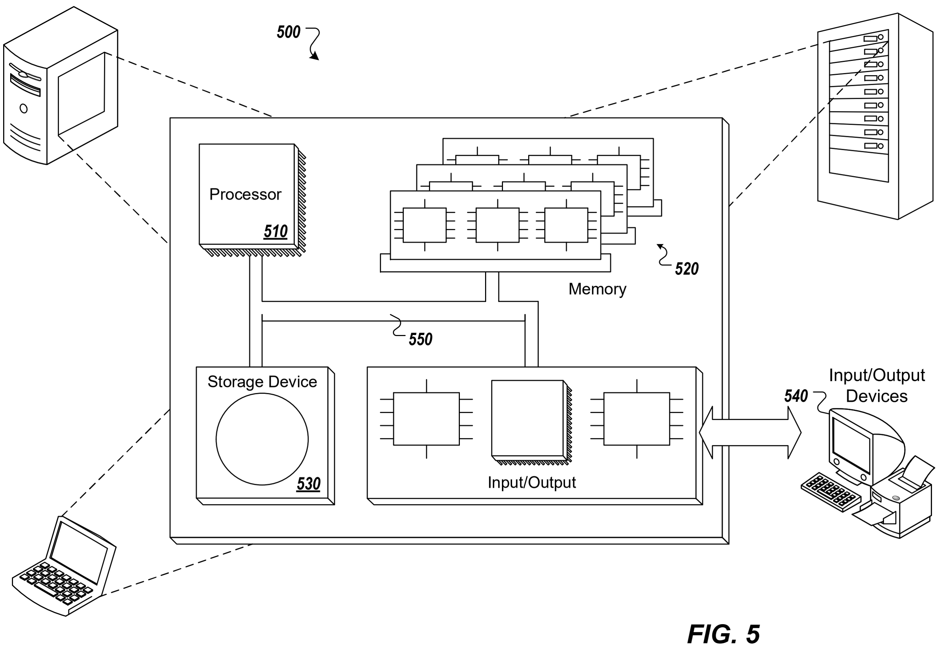

Referring now to FIG. 5, a schematic diagram of an example computing system 500 is provided. The system 500 can be used for the operations described in association with the implementations described herein. For example, the system 500 may be included in any or all of the server components discussed herein. The system 500 includes a processor 510, a memory 520, a storage device 530, and an input/output device 540. The components 510, 520, 530, 540 are interconnected using a system bus 550. The processor 510 is capable of processing instructions for execution within the system 500. In some implementations, the processor 510 is a single-threaded processor. In some implementations, the processor 510 is a multi-threaded processor. The processor 510 is capable of processing instructions stored in the memory 520 or on the storage device 530 to display graphical information for a user interface on the input/output device 540.

The memory 520 stores information within the system 500. In some implementations, the memory 520 is a computer-readable medium. In some implementations, the memory 520 is a volatile memory unit. In some implementations, the memory 520 is a non-volatile memory unit. The storage device 530 is capable of providing mass storage for the system 500. In some implementations, the storage device 530 is a computer-readable medium. In some implementations, the storage device 530 may be a floppy disk device, a hard disk device, an optical disk device, or a tape device. The input/output device 540 provides input/output operations for the system 500. In some implementations, the input/output device 540 includes a keyboard and/or pointing device. In some implementations, the input/output device 540 includes a display unit for displaying graphical user interfaces.

The features described can be implemented in digital electronic circuitry, or in computer hardware, firmware, software, or in combinations of them. The apparatus can be implemented in a computer program product tangibly embodied in an information carrier (e.g., in a machine-readable storage device, for execution by a programmable processor), and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors of any kind of computer. Generally, a processor will receive instructions and data from a read-only memory or a random access memory or both. Elements of a computer can include a processor for executing instructions and one or more memories for storing instructions and data. Generally, a computer can also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, for example, a LAN, a WAN, and the computers and networks forming the Internet.

The computer system can include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

A number of implementations of the present disclosure have been described. Nevertheless, it will be understood that various modifications may be made without departing from the spirit and scope of the present disclosure. Accordingly, other implementations are within the scope of the following claims.

## Claims

1. A computer-implemented method for executing jobs by job worker provisioned within cloud-based environments, the method being executed by one or more processors and comprising:
receiving a first job with a first time-series of a first type of historic resource utilization and a second time-series of a second type of historic utilization;
receiving a second job with a third time-series of the first type of historic resource utilization and a fourth time-series of the second type of historic utilization;
determining a first correlation coefficient between the first time-series and the third time-series;
determining a second correlation coefficient between the second time-series and the fourth time-series;
combining the first correlation coefficient with the second correlation coefficient to generate a first total correlation coefficient; and
determining that the first total correlation coefficient is below a threshold, and at least partially in response:
transmitting the first job and the second job as a first job pair to a first executor of the plurality of job executors to be executed concurrently by the first executor.

2. The method of claim 1, further comprising:
receiving a third job with a fifth time-series of the first type of historic resource utilization and a sixth time-series of the second type of historic utilization;
receiving a fourth job with a seventh time-series of the first type of historic resource utilization and an eighth time-series of the second type of historic utilization;
determining a third correlation coefficient between the fifth time-series and the seventh time-series;
determining a fourth correlation coefficient between the sixth time-series and the eighth time-series;
combining the third correlation coefficient with the fourth correlation coefficient to generate a second total correlation coefficient; and
determining that the second total correlation coefficient is below the threshold, and at least partially in response:
transmitting the third job and the fourth job as a second job pair to a second executor of the plurality of job executors to be executed concurrently by the second executor.

3. The method of claim 2, wherein the first job pair is transmitted to the first executor before the second job pair is transmitted to the second executor.

4. The method of any one of claims 1 to 3, further comprising:
receiving a fifth time-series of a third type of historic resource utilization and a sixth time-series of a fourth type of historic utilization of the first job;
receiving a seventh time-series of the third type of historic resource utilization and an eighth time-series of the fourth type of historic utilization of the second job;
determining a third correlation coefficient between the fifth time-series and the seventh time-series; and
determining a fourth correlation coefficient between the sixth time-series and the eighth time-series, wherein the first total correlation coefficient is further determined based on the third correlation coefficient and the fourth correlation coefficient.

5. The method of any one of claims 1 to 4, further comprising, in response to determining that the first total correlation coefficient is below the threshold, including the first total correlation coefficient in a sorted list and selecting the first total correlation coefficient from the sorted list to define the first job pair comprising the first job and the second job.

6. The method of any one of claims 1 to 5, wherein the first type of historic resource utilization comprises one of CPU usage, memory usage, network usage, and disk usage and the second type of historic resource utilization comprises another of CPU usage, memory usage, network usage, and disk usage.

7. The method of any one of claims 1 to 6, wherein combining the first correlation coefficient with the second correlation coefficient to generate a first total correlation coefficient comprises:
applying a first weight to the first correlation coefficient to provide a weighted first correlation coefficient; and
applying a second weight to the second correlation coefficient to provide a weighted second correlation coefficient, the first total correlation coefficient comprising a combination of the weighted first correlation coefficient and the weighted second correlation coefficient.

8. The method of any one of claims 1 to 7, further comprising:
receiving a third job with a fifth time-series of the first type of historic resource utilization and a sixth time-series of the second type of historic utilization;
determining a third correlation coefficient between the first time-series and the fifth time-series;
determining a fourth correlation coefficient between the second time-series and the sixth time-series;
combining the third correlation coefficient with the fourth correlation coefficient to generate a second total correlation coefficient; and
determining that the second total correlation coefficient exceeds a threshold, and at least partially in response:
transmitting the third job as a single job to a second executor of the plurality of job executors to be executed by the second executor.

9. The method of any one of claims 1 to 8, further comprising, prior to transmitting the first job and the second job as the first job pair to the first executor, selecting the first executor to execute the first job pair using load balancing.

10. The method of any one of claims 1 to 9, further comprising determining that third time-series has a fewer number of values than the first time series and, in response, padding the third time-series to have an equal number of values as the first time-series.

11. The method of any one of claims 1 to 10, wherein the first correlation coefficient and the second correlation coefficient are Pearson correlation coefficients.

12. A non-transitory computer-readable storage medium coupled to one or more processors and having instructions stored thereon which, when executed by the one or more processors, cause the one or more processors to perform operations according to a method of any one of claims 1 to 11.

13. A system, comprising:
a computing device; and
a computer-readable storage device coupled to the computing device and having instructions stored thereon which, when executed by the computing device, cause the computing device to perform operations according to a method of any one of claims 1 to 11.
